Europäisches Patentamt

European Patent Office

Office européen des brevets

(11) Numéro de publication: **0 305 250 B1**

(12) **FASCICULE DE BREVET EUROPEEN**

(45) Date de publication de fascicule du brevet: **17.06.92** (51) Int. Cl.⁵: **A01D 65/02**

(21) Numéro de dépôt: **88401999.3**

(22) Date de dépôt: **01.08.88**

(54) **Dispositif releveur de récolte versée tangentiel, à géométrie variable.**

(30) Priorité: **04.08.87 FR 8711108**

(43) Date de publication de la demande:
**01.03.89 Bulletin 89/09**

(45) Mention de la délivrance du brevet:
**17.06.92 Bulletin 92/25**

(84) Etats contractants désignés:
**AT BE DE ES FR GB IT NL**

(56) Documents cités:
CH-A- 279 197      DE-A- 1 582 208
DE-A- 2 427 145     DE-B- 1 108 503
DE-B- 1 125 219     FR-A- 2 432 829
GB-A- 18 926

(73) Titulaire: **Bouin, Gérard**
**9, rue de la Gravelle**
**F-86220 Dange-Saint-Romain(FR)**

(72) Inventeur: **Bouin, Gérard**
**9, rue de la Gravelle**
**F-86220 Dange-Saint-Romain(FR)**

(74) Mandataire: **Michardière, Bernard et al**
**C/O CABINET PEUSCET 68, rue d'Hauteville**
**F-75010 Paris(FR)**

Rank Xerox (UK) Business Services

# Description

La présente invention concerne un dispositif releveur de récolte versée tangentiel à géométrie variable destiné à être adapté à n'importe quelle barre de coupe de machine de récolte.

La conjoncture actuelle incite les agriculteurs à rechercher une diversification dans leurs cultures. Certaines de celles-ci ne posent pas de difficultés, mais d'autres sont la cause de problèmes car la verse est toujours importante. C'est le cas par exemple pour les légumineuses, luzerne porte-graines, pois protéagineux, vesce à graine ; en ce qui concerne les graminées, c'est le cas du ray-grass et de la fétuque à production de semences. Toutes ces plantes doivent être systématiquement relevées lors de leur récolte ; c'est une opération délicate, et le nombre de dispositifs proposés à ce jour à l'utilisateur démontre bien que la technique actuelle n'est pas satisfaisante.

C'est le cas du brevet français n° 2 317 871 déposé le 12 juillet 1976. Ce releveur très simple n'offre aucune sécurité en ce qui concerne le fonctionnement ; il n'est pas très bien adapté aux récoltes plaquées au sol. D'autres sont plus perfectionnés mais ils suivent mal les irrégularités du terrain et ils sont très exposés à la casse lors de leurs engagements accidentels dans le sol.

Le brevet français n° 2 545 683 déposé le 13 juin 1983 concerne un releveur d'un type différent, mais son étude et sa mise en pratique permettent de constater sa fragilité, il ne comporte pas de système de sécurité, son patin doit glisser sur un sol sec et dur afin de provoquer le fonctionnement de la partie appelée piston ; il ne permet pas la pose de la barre de coupe au sol à l'arrêt, ceci du fait que le tube cylindrique est fixe, solidaire du support horizontal et du montant, le fonctionnement de la partie appelée piston ne pouvant se faire sans avancement de la machine de récolte.

D'autre part, si pour les releveurs cités plus haut il est déconseillé de les laisser en permanence sur la machine, ceci afin d'en éviter l'usure et la casse, pour le releveur objet du brevet français n° 2 545 683 le démontage en est impératif après utilisation.

Le dispositif releveur, objet de la présente demande de brevet, doit apporter une solution à tous les problèmes évoqués plus haut.

Par la permanence sur la machine de récolte, il apporte une économie de main d'oeuvre, pénible et dangereuse, car le montage et le démontage du releveur est un travail dangereux pour l'opérateur car il s'effectue sur une barre de coupe pourvue de sections tranchantes et de doigts à pointes acérées. Ce nouveau releveur comporte en effet une position dite : "position de repos" permettant sa permanence sur la barre de coupe, et une position dite : "position de travail", réglable très facilement selon les différentes marques de machines de récolte.

Selon l'invention, le dispositif releveur de récolte versée destiné à être adapté à n'importe quelle barre de coupe de machine de récolte comportant une pièce support destinée à être fixée à un guide de la barre de coupe et une pièce de relevage reliée au support est caractérisé par le fait que la liaison entre la pièce support et la pièce de relevage est réalisée à l'aide de deux biellettes pivotant respectivement sur la pièce support et sur la pièce de relevage, cette dernière comportant une lumière dans laquelle peut coulisser un axe de pivotement d'une des biellettes, l'ensemble étant propre à prendre une position de repos pour laquelle ledit axe de pivotement se trouve à une extrémité de la lumière, la pièce de relevage étant écartée du sol, et une position de travail pour laquelle le nez de la pièce de relevage peut reposer sur le sol, ledit axe de pivotement se trouvant vers l'autre extrémité de la lumière.

De préférence, la lumière, prévue dans la pièce de relevage, est rectiligne et est orientée sensiblement parallèlement à la direction d'avance de la machine.

L'axe de pivotement qui peut coulisser dans la lumière est l'axe d'articulation supérieur de la biellette située en avant par rapport à l'autre biellette.

Avantageusement, dans la position de repos, les biellettes sont sensiblement parallèles et inclinées de telle sorte que leurs extrémités supérieures soient situées en arrière des extrémités inférieures tandis que, dans la position de travail, les biellettes ont des directions concourantes vers le sol ; la biellette avant est plus fortement inclinée que la biellette arrière ; l'axe de pivotement coulissant dans la lumière est située vers l'avant de cette lumière.

Le dispositif releveur comprend, de préférence, un système de rappel entre la pièce support et la pièce de relevage.

Le susdit système de rappel comporte, avantageusement, des moyens élastiques, notamment un élastique ou un ressort, tendu entre deux axes solidaires respectivement de la pièce de relevage et de la pièce support.

Le dispositif comprend une vis de réglage permettant de limiter la course d'une biellette pour le réglage de la position de travail.

La pièce de relevage du dispositif objet de la présente invention peut comporter une cavité dans laquelle vient s'engager la pièce support, qui est ainsi coiffée par ladite pièce de relevage.

L'invention est expliquée ci-après, en détail à propos d'un exemple de réalisation, non limitatif, avec référence aux dessins annexés sur lesquels:

- la figure 1 est une vue éclatée du dispositif objet de l'invention ;
- la figure 2 est une coupe longitudinale selon la ligne II-II figure 1, de la pièce support ;
- la figure 3 est une coupe longitudinale selon la ligne III-III figure 1, de la pièce de relevage ;
- la figure 4 est une vue du releveur pièce de relevage en position remontée et repliée vers l'arrière, dite "position de repos" ;
- la figure 5 est une vue du releveur, pointe avant de la pièce de relevage abaissée et avancée, dite "position de travail" ;
- la figure 6 est une vue du releveur en position de travail, lors de la pose de la barre de coupe à l'arrêt, ou au travail sur une aspérité du sol;
- la figure 7, enfin, est une vue du releveur en position de travail, mais mise en sécurité sur une élévation excessive du sol formant obstacle.

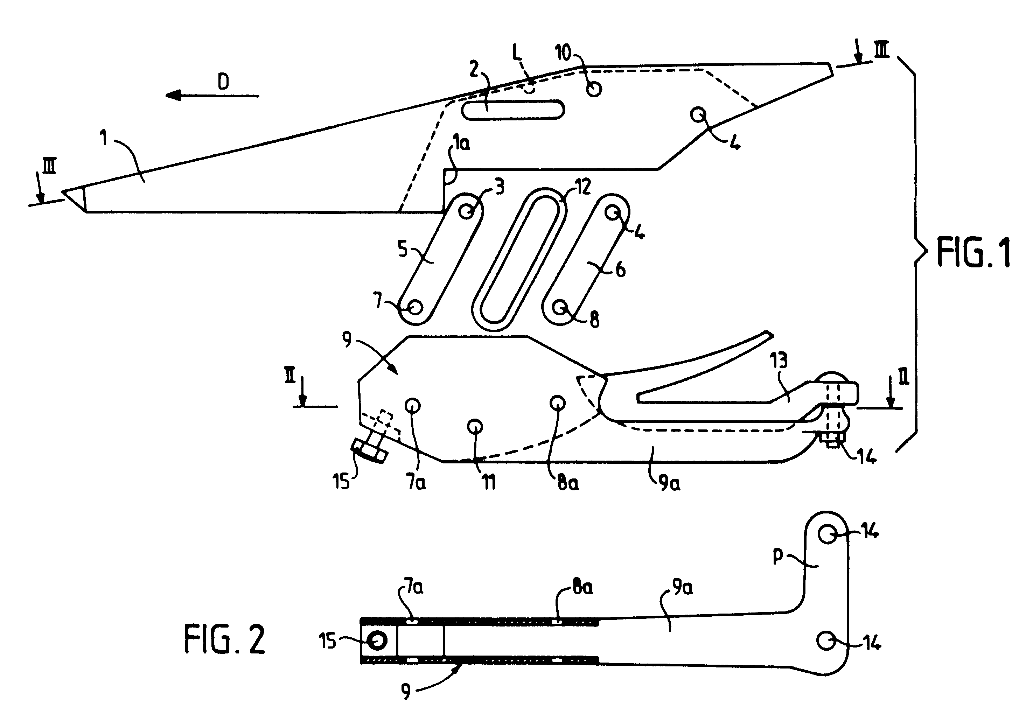

Comme montré sur les dessins, le dispositif releveur de récolte comprend une pièce de relevage 1 dont la forme particulière est bien visible sur la figure 1. Cette forme, pour la partie avant, est sensiblement celle d'un triangle avec un angle aigu situé à la pointe de la pièce ; le côté de ce triangle tourné vers le sol comporte un décrochement 1a à sa partie arrière. Un patin (non montré) pourrait être prévu à l'extrémité avant de la pièce 1 destinée à appuyer sur le sol. La pièce de relevage 1 comporte une lumière 2, rectiligne et sensiblement parallèle à la direction d'avance D d'une machine, équipée du dispositif releveur. L'axe 3 d'articulation de l'extrémité supérieure d'une biellette 5 est monté coulissant dans la lumière 2. Cette biellette 5 est située en avant, selon la direction D, par rapport à une deuxième biellette 6 montée pivotante, à son extrémité supérieure sur un axe 4 porté par la pièce support 1.

Les deux biellettes pivotantes 5 et 6 servent d'organes de liaison entre la pièce de relevage 1 et une pièce support 9. Cette pièce 9 comporte une partie avant de hauteur plus importante, dont le contour est visible sur les dessins, prolongée vers l'arrière par une patte 9a. La partie avant de la pièce 9 comporte un logement, ouvert vers le haut, limité par deux parois 9b, 9c, entre lesquelles sont engagées les parties inférieures des biellettes 5, 6. Des trous 7a et 8a sont prévus sur cette pièce 9 pour recevoir des axes de pivotement 7, 8 prévus aux extrémités inférieures respectives des biellettes 5 et 6.

La pièce de relevage 1 comporte une cavité L et porte un axe 10 dans la zone de cette cavité comprise entre la lumière 2 et l'axe 4, tandis que la pièce support 9 porte un axe 11 situé entre les axes 7 et 8. Un système de rappel est prévu entre les pièces 1 et 9, ce système de rappel pouvant comprendre un puissant élastique 12, ou un ressort de forme appropriée, tendu entre les axes 10 et 11.

Selon une variante avantageuse, non représentée, la pièce 1 comporte une cavité de dimensions suffisantes dans laquelle vient s'engager la pièce support 9 et qui est ainsi coiffée par la pièce de relevage 1.

La pièce 9 porte les axes 7 et 8 et l'axe 11 de fixation inférieur du système de rappel 12. Une vis de réglage 15 servant à limiter la course de la biellette 5 est prévue vers l'extrémité avant inférieure de la pièce 9.

Des moyens de fixation du dispositif releveur à la machine sont prévus et comprennent une branche transversale p (figure 1) solidaire de la patte 9a. Des trous sont prévus dans cette branche p pour permettre, de part et d'autre d'un doigt 13 d'origine du dispositif de coupe de la machine, le passage de boulons de fixation 14.

Le fonctionnement du dispositif releveur est le suivant.

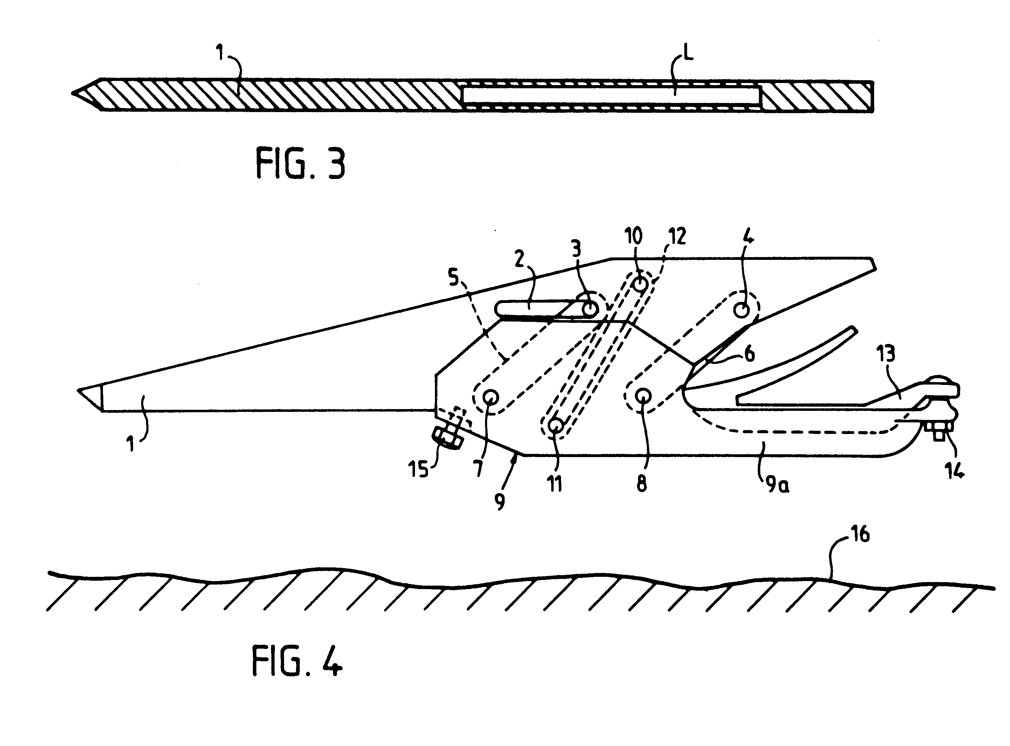

En position de repos (figure 4), la pièce 1 est verrouillée en position haute reculée et plus haute que les doigts 13 et la barre de coupe de la machine traversant ces doigts. La pièce 1 est ainsi à l'abri de l'usure sur le sol 16 et des efforts inutiles dûs aux inégalités du terrain. En position de repos, le releveur ne gêne aucunement le travail de coupe de la machine, n'entrave pas le passage normal de la récolte.

La position de repos du releveur est obtenue manuellement, en toute sécurité, sans effort de l'opérateur, et en quelques instants pour les releveurs d'une machine, à partir de la position travail : en saisissant la partie avant de la pièce 1, en la soulevant et en poussant vers l'arrière, le dispositif vient se verrouiller automatiquement par basculement vers l'arrière de la partie haute des biellettes 5 et 6 par rotation autour de leurs axes 7 et 8. L'axe 3 de la biellette 5 vient coulisser vers l'arrière dans la lumière 2 aménagée dans la pièce 1. La partie creuse L permet le mouvement des biellettes 5 et 6 et le passage du système de rappel 12.

La pièce 1 prend alors la position repos, appuyée sur la pièce 9 ; la position repos est solidement maintenue en place par le système de rappel 12.

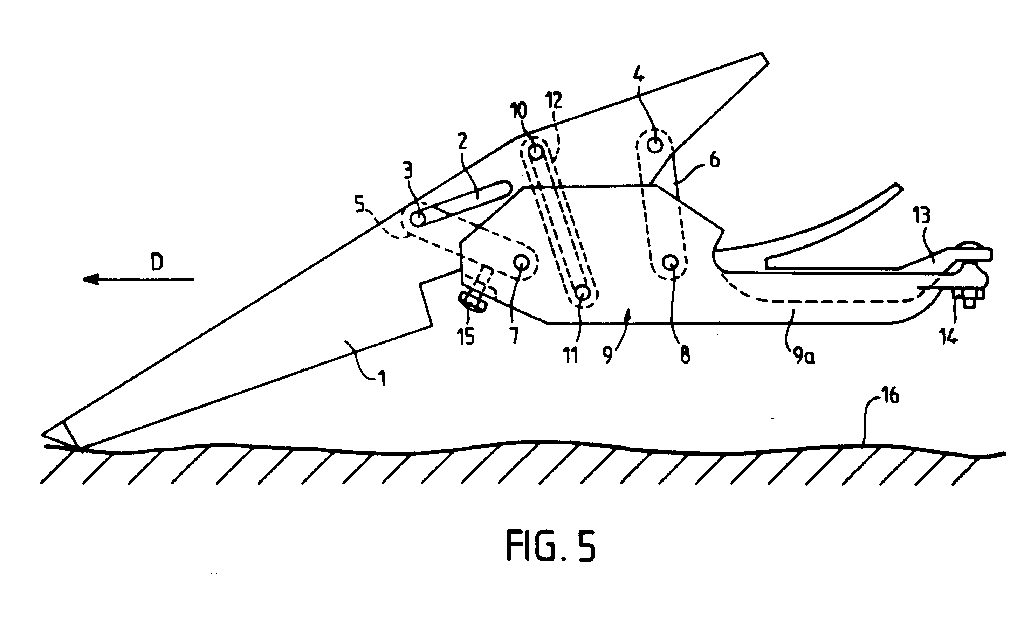

La position travail (figure 5), permettant à la pièce 1 de glisser sous la récolte versée, est obtenue à partir de la position repos, en tirant sur l'avant de la pièce 1 et en l'abaissant manuellement.

Quelques instants suffisent pour les releveurs d'une machine, en toute sécurité pour l'opérateur.

Sous l'effet de la traction vers l'avant, la pièce 1 se soulève par l'action des biellettes 5 et 6 qui, par rotation autour des axes 7 et 8, passent de la position inclinée vers l'arrière, à une position inclinée vers l'avant.

La pièce 1 avance mais reste en position haute. Une pression verticale énergique sur la pointe avant de la pièce 1 fait glisser l'axe 3 de la biellette 5 de l'extrémité arrière vers l'extrémité avant de la lumière 2.

La biellette 5 prend alors une position très inclinée vers l'avant alors que la partie haute de la biellette 6 recule légèrement, ce qui provoque la position très inclinée vers l'avant de la pièce 1. Cette inclinaison est réglable par l'action de la vis 15 sur la course de la biellette 5.

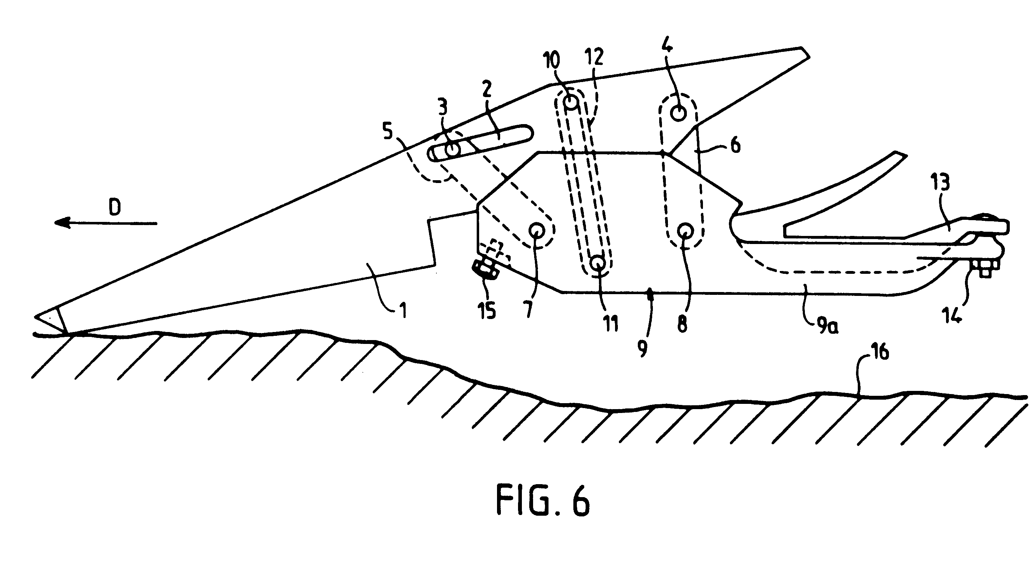

En position de travail (figure 6), quand le conducteur de la machine pose la barre de coupe au sol 16, l'avant de la pièce 1 entre en contact avec celui-ci. A ce moment, l'axe 3 de la biellette 5 glisse dans la lumière 2 vers l'arrière, l'axe 4 de la biellette 6 recule légèrement et la position s'ajuste automatiquement au sol 16.

En position de travail (figure 6), même position que précédemment, lors de l'avancement de la machine, barre de coupe légèrement levée, la pointe avant de la pièce 1 est en contact avec le sol 16 par son poids et par l'action du système de rappel 12; la pièce 1 grâce à sa pointe avant légèrement relevée, se soulève sur une aspérité du terrain 16 et l'effet sur le dispositif est le même que lors de la pose de la barre de coupe au sol 16 à l'arrêt. L'axe 3 de la biellette 5 glisse dans la lumière 2 vers l'arrière, l'axe 4 de la biellette 6 recule légèrement, ce qui a pour effet de permettre à la pointe avant de la pièce 1 de se soulever verticalement et de s'ajuster au sol 16.

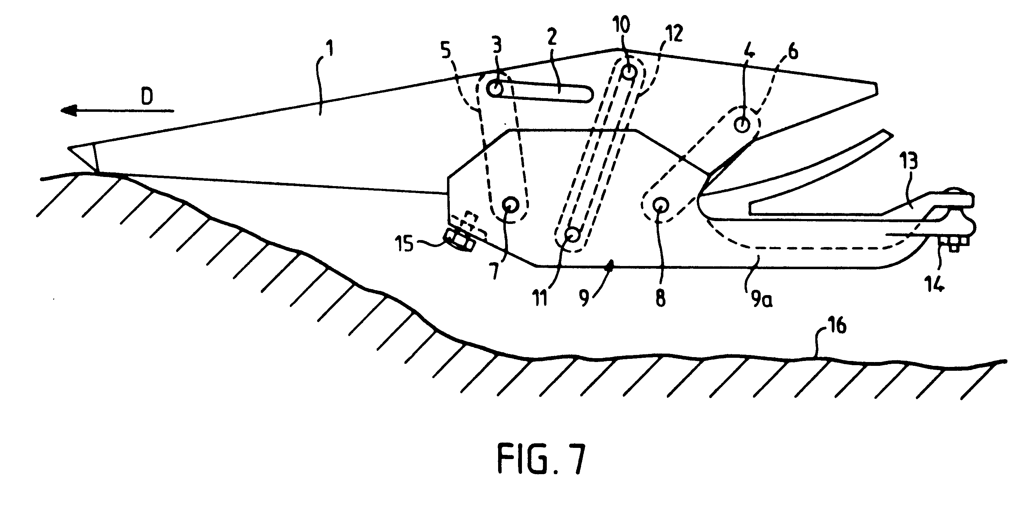

La position de travail, avec mise en sécurité est montrée sur la figure 7. Si, par inadvertance, la pointe avant de la pièce 1 vient à entrer dans le sol 16 par fausse manoeuvre, ou par cause d'une élévation excessive du sol 16 cachée au conducteur par la végétation versée, la force exercée longitudinalement sur la pièce 1 par l'avancement de la machine provoque la butée de l'avant de la lumière 2 sur l'axe 3 de la biellette 5 alors très inclinée vers l'avant. La pièce 1 recule sous la résistance de l'obstacle due à l'avancement de la machine. A ce moment-là, l'axe 3 de la biellette 5 recule en remontant avec lui l'avant de la pièce 1. L'axe 4 de la biellette 6 recule aussi en s'abaissant, entraînant avec lui la partie arrière de la pièce 1, ce qui accentue l'effet de bascule de la pièce 1. Le système de rappel 12 se tend.

Plus la résistance engendrée par l'obstacle est grande, plus la réaction du releveur l'est aussi.

La pièce 1 recule, l'angle d'entrée dans l'obstacle s'inverse en angle de sortie, ce qui peut amener la pointe avant de la pièce 1 à une hauteur égale ou supérieure au niveau de coupe de la machine. C'est une marge de sécurité théorique qui va au-delà du besoin réel puisqu'elle correspond pratiquement à la position repos du releveur. En pratique, la régulation s'établit bien avant cette limite et le système de rappel 12 fait reprendre, l'obstacle franchi, la position initiale de travail à la pièce 1.

Le dispositif releveur de récolte présenté ici intéressera tous les agriculteurs cultivant ou désirant cultiver les plantes sensibles à la verse. Ce releveur intéressera également les constructeurs de machines agricoles qui seront à même de proposer à leurs clients un dispositif nouveau, performant et fiable.

**Revendications**

1. Dispositif releveur de récolte versée destiné à être adapté à n'importe quelle barre de coupe de machine de récolte comportant une pièce support (9) destinée à être fixée à un guide de la barre de coupe et une pièce de relevage (1) reliée au support, caractérisé par le fait que la liaison entre la pièce support (9) et la pièce de relevage (1) est réalisée à l'aide de deux biellettes (5, 6) pivotant respectivement sur la pièce support (9) et sur la pièce de relevage (1), cette dernière comportant une lumière (2) dans laquelle peut coulisser un axe de pivotement (3) d'une des biellettes (5), l'ensemble étant propre à prendre une position de repos pour laquelle ledit axe de pivotement (3) se trouve à une extrémité de la lumière (2), la pièce de relevage étant écartée du sol (16), et une position de travail pour laquelle le nez de la pièce de relevage peut reposer sur le sol (16), ledit axe de pivotement se trouvant vers l'autre extrémité de la lumière.

2. Dispositif selon la revendication 1, caractérisé par le fait que la lumière (2), prévue dans la pièce de relevage (1), est rectiligne et est orientée sensiblement parallèlement à la direction d'avance (D) de la machine.

3. Dispositif selon la revendication 1 ou 2, caractérisé par le fait que l'axe de pivotement (3) qui peut coulisser dans la lumière est l'axe d'articulation supérieur de la biellette (5) située en avant par rapport à l'autre biellette 6).

4. Dispositif selon l'une des revendications précédentes, caractérisé par le fait que, dans la position de repos, les biellettes (5, 6) sont sensiblement parallèles et inclinées de telle sorte que leurs extrémités supérieures soient situées en arrière des extrémités inférieures tandis que, dans la position de travail, les biellettes (5, 6) ont des directions concourantes vers le sol (16), l'axe de pivotement coulissant (3) dans la lumière (2) étant situé vers l'avant de cette lumière.

5. Dispositif selon l'une des revendications précédentes, caractérisé par le fait qu'il comprend un système de rappel (12) entre la pièce support et la pièce de relevage.

6. Dispositif selon la revendication 5, caractérisé par le fait que le système de rappel (12) comprend des moyens élastiques, notamment un élastique ou un ressort, tendus entre deux axes (10, 11) solidaires respectivement de la pièce de relevage (1) et de la pièce support (9).

7. Dispositif selon l'une quelconque des revendications précédentes, caractérisé par le fait qu'il comporte une vis de réglage (15) permettant de limiter la course d'une biellette (5) pour le réglage de la position de travail.

**Claims**

1. Ear lifter intended to be adapted to any cutter bar of a harvesting machine, comprising a supporting element (9) adapted to be fixed to a guide of the cutter bar and a lifting element (1) connected to the support, characterised in that the connection between the supporting element (9) and the lifting element (1) is achieved with the aid of two links (5, 6) swivelling on the supporting element (9) and on the lifting element (1) respectively, the latter comprising an aperture (2) in which a swivel pin (3) of one of the links (5) can slide, the assembly being capable of assuming an idle position, for which the said swivel pin (3) is situated at one end of the aperture (2), the lifting element being at a distance from the ground (16), and an operating position, for which the tip of the lifting element can rest on the ground (16), the said swivel pin being situated towards the other end of the aperture.

2. Apparatus according to claim 1, characterised in that the aperture (2) provided in the lifting element (1) is rectilinear and is directed substantially parallel to the forward direction (D) of the machine.

3. Apparatus according to claim 1 or claim 2, characterised in that the swivel pin (3) which can slide in the aperture is the upper hinge pin of the link (S) situated forward of the other link (6).

4. Apparatus according to one of the preceding claims, characterised in that, in the idle position, the links (5, 6) are substantially parallel and are inclined in such a manner that their upper ends are situated to the rear of the lower ends, while, in the operating position, the links (5, 6) have concurrent directions towards the ground (16), the swivel pin (3) sliding in the aperture (2) being situated towards the front of this aperture.

5. Apparatus according to one of the preceding claims, characterised in that it comprises a return system (12) between the supporting element and the lifting element.

6. Apparatus according to claim 5, characterised in that the return system (12) comprises elastic means, especially an elastic band or a spring, tensioned between two pins (10, 11) integral with the lifting element (1) and the supporting element (9) respectively.

7. Apparatus according to any one of the preceding claims, characterised in that it comprises an adjusting screw (15) for limiting the stroke of a link (5) in order to adjust the operating position.

**Patentansprüche**

1. Ährenheber, der an jeden beliebigen Mähwerkmesserbalken anpassbar ist und der ein an einer Führung des Messerbalkens anzubringendes Tragteil (9) und einen mit dem Tragteil verbundenen Hebefinger (1) aufweist, dadurch gekennzeichnet, dass die Verbindung zwischen dem Tragteil (9) und dem Hebefinger (1) durch zwei Schwingarme (5,6) gebildet ist, die auf dem Tragteil (9) bzw. auf dem Hebefinger (1) schwenkbar sind, wobei letzterer eine Öffnung (2) aufweist, in der eine Schwenkachse (3) eines (5) der Schwenkarme gleiten kann, wobei das Ganze geeignet ist, eine Ruhestellung, in der sich die Schwenkachse (3) am einen Ende der Öffnung (2) befindet und der Hebefinger vom Boden (16) abgehoben ist, und eine Arbeitsstellung, bei der die Spitze des Hebefingers aufdem Boden (16) aufliegen kann und die Schwenkachse sich am anderen Ende der Öffnung befindet, einzunehmen.

2. Ährenheber nach Anspruch 1, dadurch gekennzeichnet, dass die im Hebefinger (1) vorgesehene Öffnung (2) geradlinig ist und im wesentlichen parallel zur Vortriebsrichtung (D) des Mähwerks verläuft.

3. Ährenheber nach Anspruch 1 oder 2, dadurch gekennzeichnet, dass die in der Öffnung gleiten können de Schwenkachse (3) die obere Gelenkachse des vor dem anderen Schwingarm (6) angeordneten Schwingarms (5) ist.

4. Ährenheber nach einem der vorangehenden Ansprüche, dadurch gekennzeichnet, dass die Schwingarme (5,6) in der Ruhestellung im wesentlichen parallel zueinander und derart schräg liegen, dass deren obere Enden hinter deren unteren Enden liegen, während die Schwingarme (5,6) in der Arbeitsstellung zum Boden (16) hin zusammenlaufen, wobei sich die in der Öffnung (2) gleitende Schwenkachse (3) im vorderen Teil der Öffnung befindet.

5. Ährenheber nach einem der vorangehenden Ansprüche, dadurch gekennzeichnet, dass er ein Rückholsystem (12) zwischen dem Tragteil und dem Hebefinger aufweist.

6. Ährenheber nach Anspruch 5, dadurch gekennzeichnet, dass das Rückholsystem (12) elastische Mittel, insbesondere ein Gummiband oder eine Feder, aufweist, die zwischen zwei mit dem Hebefinger (1) bzw. dem Tragteil (9) verbundenen Achsen (10, 11) gespannt sind.

7. Ährenheber nach einem der vorangehenden Ansprüche, dadurch gekennzeichnet, dass er eine Einstellschraube (15) zum Begrenzen des Wegs eines Schwingarms (5) zum Einstellen der Arbeitsposition aufweist.

FIG.1

FIG.2

EP 0 305 250 B1

FIG. 3

FIG. 4

EP 0 305 250 B1

FIG. 5

FIG. 6

FIG. 7